# EUROPEAN PATENT SPECIFICATION

(11) **EP 3 990 861 B1**
(45) Date of publication and mention of the grant of the patent: **16.10.2024**
(21) Application number: 20736435.7
(22) Date of filing: 12.06.2020
(51) Int. Cl.: G01C 15/00, F16M 11/32

(54) **A LEVELLING DEVICE FOR LEVELLING A TOPOGRAPHIC SURVEY INSTRUMENT WITH RESPECT TO A REFERENCE HORIZONTAL PLANE AND A RELATIVE LEVELLING SYSTEM**
NIVELLIERVORRICHTUNG ZUM NIVELLIEREN EINES TOPOGRAFISCHEN VERMESSUNGSINSTRUMENTS BEZÜGLICH EINER HORIZONTALEN REFERENZEBENE UND NIVELLIERSYSTEM
DISPOSITIF DE NIVELAGE POUR NIVELER UN INSTRUMENT DE RELEVÉ TOPOGRAPHIQUE PAR RAPPORT À UN PLAN HORIZONTAL DE RÉFÉRENCE ET SYSTÈME DE NIVELAGE RELATIF

(30) Priority: 14.06.2019 IT 201900009006
(43) Date of publication of application: 04.05.2022
(73) Proprietor: Monitor the Planet S.r.l., 48018 Faenza (RA) (IT)
(72) Inventor: DAL MONTE, Emanuele, 48017 Conselice (RA) (IT); SETTIMI, Alessandro, 06059 Todi (PG) (IT); RAZZANELLI, Matteo, 50052 Certaldo (FI) (IT); BONELLO, Stefano, 48017 Conselice (RA) (IT); ARGINELLI, Luana, 48018 Faenza (RA) (IT); CAPORALE, Danilo, 66034 Lanciano (CH) (IT)
(74) Representative: Dall'Olio, Christian
(86) International application number: PCT/IB2020/055534
(87) International publication number: WO 2020/250192

(56) References cited:
- WO-A1-2018/010578
- CN-A- 106 918 318
- FR-A1- 2 966 236
- US-A- 5 485 266
- US-A1- 2012 168 593

## Description

### FIELD OF THE INVENTION

The present invention relates to the technical sector concerning topography.

In particular, the present invention relates to a levelling device for levelling a motorized total station with respect to a reference horizontal plane.

### DESCRIPTION OF THE PRIOR ART

Topography is the science that studies instruments and methods for measuring and representing parts of the physical surface of the Earth.

The measuring and representation includes the use of topographic detection instruments, i.e. instruments suitable for carrying out direct and indirect measurements of horizontal and inclined distances, horizontal and vertical angles, level differences and, in the case of digital total stations and GPS stations, a direct determination of the coordinates of the points, an indirect result of the measurements made with simple instruments.

These topographic detection instruments can be, for example, a motorised total station, a GPS receiver or a laser scanner.

With the purpose of correctly using the above-mentioned instruments it is necessary to level the topographic survey instrument with respect to a reference horizontal plane.

The term levelling is taken to mean the operation with which the base of a topographic survey instrument is made horizontal, i.e. parallel to a reference horizontal plane.

In a known levelling procedure, an operator, appointed to take measurements with a topographic survey instrument, fixes a tripod to the terrain, which will support the topographic survey instrument during the measurements.

In turn the tripod comprises telescopic feet for fixing the tripod to the terrain, a rest plane by means of which the topographic survey instrument is anchored to the tripod and a spherical level arranged on the rest plane. The topographic survey instrument will be anchored to the rest plane by mans of a base or "anchoring plate".

When the operator fixes the tripod to the terrain she or he will seek to make the rest plane horizontal, with respect to a reference horizontal plane, with the aid of the spherical level and the telescopic feet: in fact, the operator views the inclination of the rest plane by means of the spherical level and corrects the inclination by moving the telescopic feet of the tripod. Once the inclination of the rest plane of the tripod is correct, the topographic survey instrument is anchored to the tripod by means of the base.

Subsequently, in order to complete the levelling of the topographic survey instrument, the operator acts on the dropout screws present on the topographic survey instrument itself; in other words, by regulating the dropout screws the bubble in the spherical level on the topographic survey instrument is centred in order to level to instrument.

Therefore, the known levelling procedure includes a manual levelling, by the operator who will be taking the measurements, by means of a tripod, a spherical level and the dropout screws and the spherical level of a topographic survey instrument.

Therefore, this known procedure will necessarily require the presence of an operator.

Further, the above-described levelling procedure requires the attention of an operator who is an expert in the sector, who can set up using their wisdom learned over years of experience, since an incorrect levelling of the topographic survey instrument would jeopardise the following measurements by means of the topographic survey instrument and would render the measurements unreliable, or in the worst case invalid.

Further, the above-mentioned set up procedure, being manual, would require considerable working times.

WO2018/010578 A1 discloses a system and a method for providing stability support. The system comprises: a movable foundation that moves on a surface, and a base rotatably mounted to the movable foundation, a leveling platform mounted to the base, a control arm which connects the leveling platform and the base.

CN106918318 A discloses a three-supporting-point theodolite leveling device and a leveling method. The device comprises: a first supporting leg, a second supporting leg and a third supporting leg, which are arranged in a regular triangle manner; three supporting points which are uniformly distributed on three points on the circumference of the theodolite; an angle detector which is arranged on a theodolite platform.

### SUMMARY OF THE INVENTION

In the light of the above, the aim of the present invention consists in obviating the above-mentioned drawbacks.

The above aims are obtained with a levelling device for levelling a topographic survey instrument with respect to a reference horizontal plane according to claim 1 and a levelling system for levelling a topographic survey instrument with respect to a reference horizontal plane according to claim 11.

The first inclination sensor and the second inclination sensor advantageously detect the inclination of the first axis and the second axis and communicate the signal relating to the inclination values detected to the control unit. As a function of the signal received, the control unit commands the three electrical linear actuators to move the support as long as the plane defined by the first axis and second axis is inclined by a predetermined angle with respect to the reference horizontal plane, so as to determine the alignment of the main axis of the topographic survey instrument with the gravitational vertical when the topographic survey instrument is removably fixed to the support.

It is thus possible to level a topographic survey instrument automatically, without the presence of an operator, on the basis of what is communicated by the control unit programmed to correct the inclination of the support, on which the first inclination sensor and the second inclination sensor are mounted on board and, thus, to level the topographic survey instrument.

Further, the movement of the support by three electrical linear actuators, in turn commanded by the control unit, enables levelling the topographic survey instrument in a shorter time range with respect to that of the levelling procedure of the prior art.

Further, the use of electrical linear actuators makes the levelling operation of the topographic survey instrument more precise, as each linear electrical actuator ensures a movement precision of 2 hundredths of a millimetre.

In detail, the three electrical linear actuators not only guarantee a precise movement of the support, but also maintain the topographic survey instrument stable, when removably fixed to the support, during the measuring operations. The ball screws present inside each linear electrical actuator determine an axial rigidity of the linear electrical actuator itself, which, consequently, ensures the movement of the topographic survey instrument into a stable position, when removably fixed to the support.

A further advantage relates to a greater degree of precision of the main axis of the topographic survey instrument in its alignment to the gravitational vertical passing through the intersection point of the first axis and the second axis.

As the first axis and the second axis intersect in the relative intersection point so as to be perpendicular to one another, defining a plane parallel to the plane on which the equilateral triangle delineated by the coupling points among the three electrical linear actuators and the support lies, and at the same time the topographic survey instrument is removably fixed to the support so that the main axis of the topographic survey instrument passes through the intersection point and through the orthocentre of the equilateral triangle, the propagation of the error in the system of equations with which the control unit has been programmed is reduced to a minimum.

In this way, there is a simplified programming of the control unit and a reduction in the command lines as the actions to be controlled, i.e. the command to lengthen or shorten to be provided to the three electrical linear actuators, are proportional to the error relating to the measuring of the first inclination sensor and the second inclination sensor and therefore to the position of the first inclination sensor and the second inclination sensor with respect to the first axis and the second axis.

Further, as the system of equations with which the control unit has been programmed receives in input the measurement signal of the first inclination sensor and the second inclination sensor and, as a known positioning, the position of the orthocentre of the equilateral triangle, there is a reduction in the command lines linked to the fact that, when the topographic survey instrument is removably fixed to the support, the main axis of the topographic survey instrument passes through the intersection point and through the orthocentre of the equilateral triangle.

### BRIEF DESCRIPTION OF THE DRAWINGS

Specific embodiments of the invention will be described in the following part of the present description, according to what is set down in the claims and with the aid of the accompanying tables of drawings, in which:
- figure 1 and figure 2 are views, respectively perspective and lateral, of the levelling device that is the object of the present invention;
- figure 3 and figure 4 are views, respectively perspective and lateral, of the levelling device of figure 1, in a first position;
- figure 5 and figure 6 are views, respectively perspective and lateral, of the levelling device of figure 1, in a second position;
- figures 7-9 are schematic views of detail K of figure 2, in which components have been removed better to view others, according to different embodiments.

### DESCRIPTION OF THE PREFERRED EMBODIMENTS

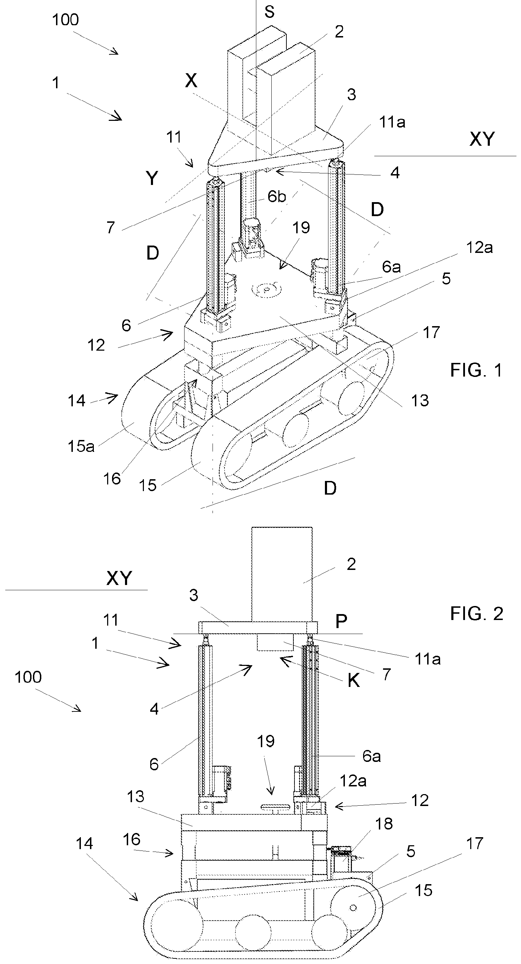

With reference to the appended tables of drawings, reference numeral (1) denotes in its entirety a levelling device for levelling a topographic survey instrument (2) with respect to a reference horizontal plane (xy) comprising: a support (3) arranged for supporting a topographic survey instrument (2); removable fixing means for removably fixing the topographic survey instrument (2) to the support (3); a first inclination sensor (4) and a second inclination sensor (9) which are mounted on board the support (3) in order to detect an inclination, respectively, of a first axis (Y) and a second axis (X), which intersect in a relative intersection point (P1) so as to be perpendicular to one another; it comprises three electrical linear actuators (6, 6a, 6b) which are rotatably couplable to the support (3), at a relative first end, at a mutual distance (D) such as to delineate an equilateral triangle and which are arranged so as to move the support (3); it comprises a rest base (13) to which the three electrical linear actuators (6, 6a, 6b) are rotatably coupled at a relative second end; a control unit (5) which is connected to the first inclination sensor (4) and to the second inclination sensor (9) in order to receive the signal relative the inclination value measured and which is connected to the three electrical linear actuators (6, 6a, 6b) in order to move the support (3). The control unit (5) is configured in such a way that, when the topographic survey instrument (2) is removably fixed to the support (3) by means of the removable fixing means so that the main axis (S) of the topographic survey instrument (2) passes through the intersection point (P1) and through the orthocentre of the equilateral triangle, and commands the three electrical linear actuators (6, 6a, 6b), as a function of the signal received from the first inclination sensor (4) and from the second inclination sensor (9), in order to move the support (3) so that the first axis (Y) and the second axis (X) define a plane (P), inclined by a predetermined angle with respect to the reference horizontal plane (xy), so as to determine the alignment of the main axis (S) of the topographic survey instrument (2) with the gravitational vertical passing through the intersection point (P1) (see figures 1-2). In other words, the orientation of the main axis (S) of the topographic survey instrument (2) will be parallel with the gravitational vertical passing through the intersection point (P1).

The term levelling is taken to mean the operation with which the base of a topographic survey instrument (2) is made horizontal with respect to a reference horizontal plane (xy).

The topographic survey instrument (2) in the invention is a motorised total station.

By reference horizontal plane (xy) is meant the horizontal plane with respect to which the gravitational vertical is orientated by an angle of 90°.

A topographic survey instrument (2) can be considered levelled when the relative main axis (S) coincides with the gravitational vertical passing through the station point of the topographic survey instrument (2), which has known coordinates.

In other words, the term levelling is taken to mean, in the sector jargon, the setting up of a topographic survey instrument (2) in a location.

By first axis (Y) and second axis (X) is meant the respective inclination measurement axis of the first inclination sensor (4) and second inclination sensor (9).

The three electrical linear actuators (6, 6a, 6b) are rotatably coupled to the support (3) at three coupling points so as to delineate the vertices of the equilateral triangle.

The plane (P) defined by the first axis (Y) and by the second axis (X) and the plane in which the vertices of the equilateral triangle are parallel to one another.

The conjunction of the intersection point (P1) and the orthocentre of the equilateral triangle are perpendicular to the plane (P) defined by the first axis (Y) second axis (X) and the plane in which the vertices of the equilateral triangle are positioned.

When the topographic survey instrument is supported by the support (3) it can be removably fixed thereto by the removable fixing means so that the base of the topographic instrument (2) is parallel to the plane identified by the first axis (Y) and second axis (X).

The three electrical linear actuators (6, 6a, 6b) are fixed to the support (3).

The support (3), when it supports the topographic survey instrument (2), is interposed between the topographic survey instrument (2) and the three electrical linear actuators (6, 6a, 6b).

The support (3) can comprise a first housing (7) for receiving the first inclination sensor (4).

The first inclination sensor (4) can be a horizontal inclinometer.

The three electrical linear actuators (6, 6a, 6b) can be arranged so as to delineate a polyhedron having five faces (see figures 1, 3 and 5).

This arrangement guarantees a stable and controlled movement of the support (3).

The predetermined angle can be identified by the smallest angle defined by the first axis (Y) and the second axis (X) and the reference horizontal plane (xy).

The predetermined angle can be of less than 2 first degrees.

The predetermined angle can preferably be of less than 1 first and 25 seconds. The three electrical linear actuators (6, 6a, 6b) are advantageously rotatably coupled to the rest base (13) in such a way that, during use of the levelling device (1), the distance between the coupling points between three electrical linear actuators (6, 6a, 6b) and the support (3) is maintained constant.

The three electrical linear actuators (6, 6a, 6b) are preferably arranged so as to move the support (3) and arrange the support (3) on the inclined plane (P) and have an angle of inclination close to 0° with respect to the reference horizontal plane (xy).

The control unit (5) can be remotely managed by means of a computer, tablet or smartphone.

On the basis of trigonometric calculations, it has advantageously been demonstrated that this arrangement and distance between the three electrical linear actuators (6, 6a, 6b) guarantees a movement of the support (3) that is more greatly controlled with respect to the prior art. In detail, on the basis of these trigonometric calculations, the control unit (5) was programmed to command the three electrical linear actuators (6, 6a, 6b) with the aim of moving the support (3) to be arranged on an inclined plane (P), which must be inclined by 1' and 25" with respect to the reference horizontal plane (xy).

By distance (D) is meant the distance between each coupling point between a linear electrical actuator (6, 6a, 6b) and the support (3) (see figures 1, 3 and 5).

The distance (D) can be comprised between 450 mm and 550 mm.

The above-mentioned distance (D) is preferably 504 mm.

Each linear electrical actuator (6, 6a, 6b) can have a longitudinal extension axis.

Each linear electrical actuator (6, 6a, 6b) can lengthen or shorten along the relative longitudinal extension axis.

The longitudinal extension axis of each linear electrical actuator (6, 6a, 6b) can extend in a plane that is transversal to plane (P).

The first inclination sensor (4) and the second inclination sensor (9) can be arranged in proximity of and equidistant from the orthocentre of the equilateral triangle.

In other words, the first inclination sensor (4) and the second inclination sensor (9) are arranged in proximity of the main axis (S) of the topographic survey instrument (2).

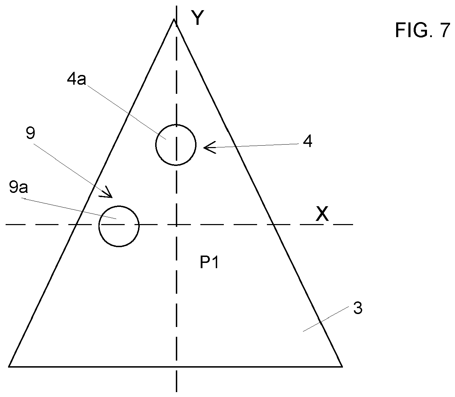

The first inclination sensor (4) is preferably a first inclinometer (4a) having a measuring range comprised between -40° and +40° (see figures 7-9).

The second inclination sensor (9) is preferably a second inclinometer (9a) having a measuring range comprised between -40° and +40°.

The first inclination sensor (4) and second inclination sensor (9) preferably have a measuring range comprised between -30° and +30°.

The levelling device (1) can comprise a third inclination sensor (8) that is mounted on board the support (3) in order to detect the inclination of the first axis (Y); the third inclination sensor (8) can be a third inclinometer (8a) having a measuring range comprised between -20° and +20°; the control unit (5) is connected to the third inclination sensor (8) in order to receive the signal relative to the inclination value measured and is configured in such a way that it commands the three electrical linear actuators (6, 6a, 6b) in order to move the support (3) as a function of the signal received from the third inclination sensor (8) (see figures 7-9).

In detail, the control unit (5) is configured in such a way that, when the topographic survey instrument (2) is removably fixed to the support (3) by means of the removable fixing means so that the main axis (S) of the topographic survey instrument (2) passes through the intersection point (P1) and through the orthocentre of the equilateral triangle, and commands the three electrical linear actuators (6, 6a, 6b), as a function of the signal received from the first inclination sensor (4), from the second inclination sensor (9) and from the third inclination sensor (8), in order to move the support (3) so that the first axis (Y) and the second axis (X) define a plane (P), inclined by a predetermined angle with respect to the reference horizontal plane (xy), so as to determine the alignment of the main axis (S) of the topographic survey instrument (2) with the gravitational vertical passing through the intersection point (P1).

The third inclination sensor (8) preferably detects inclination values of the first axis (Y) comprised between -14.5° and +14.5°.

The first inclination sensor (4) and the third inclination sensor (8) can have the same resolution.

The third inclination sensor (8) can be more sensitive to the variations in inclination with respect to the first inclination sensor (4).

In detail, the third inclinometer (8a) detects the inclination of the first axis (Y) when the inclination value measured is comprised in the range between -14.5° e +14.5°, while the first inclinometer (4a) detects the inclination of the first axis (Y) when the inclination value measured is out of the above range.

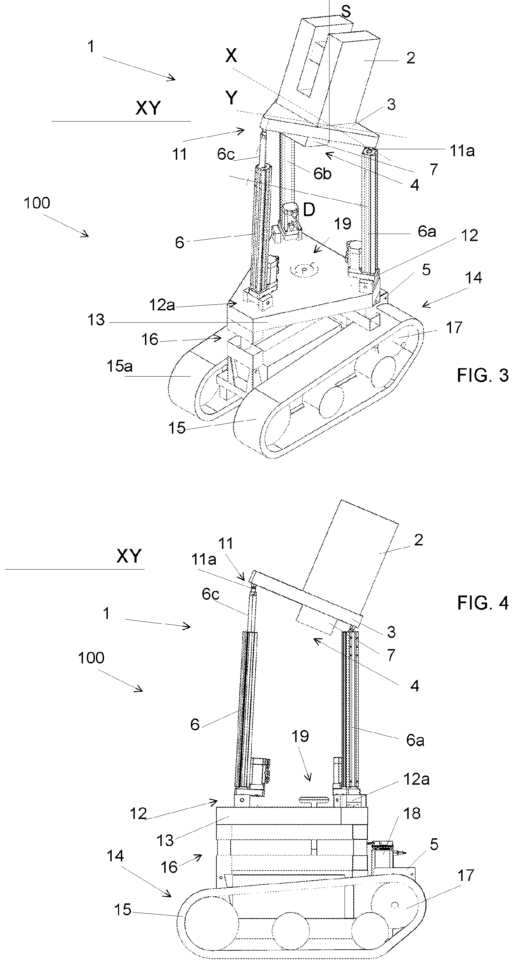

During use of the levelling device (1) of the present invention, initially the first inclinometer (4a) detects the inclination of the first axis (Y) and communicates the inclination value measured to the control unit (5). At the same time, the second inclinometer (9a) detects the inclination of the second axis (X) and communicates the inclination value measured to the control unit (5). The control unit commands the three electrical linear actuators (6, 6a, 6b) to carry out a first correction of the inclination of the first axis (Y) and second axis (X) (see figures 3 and 4).

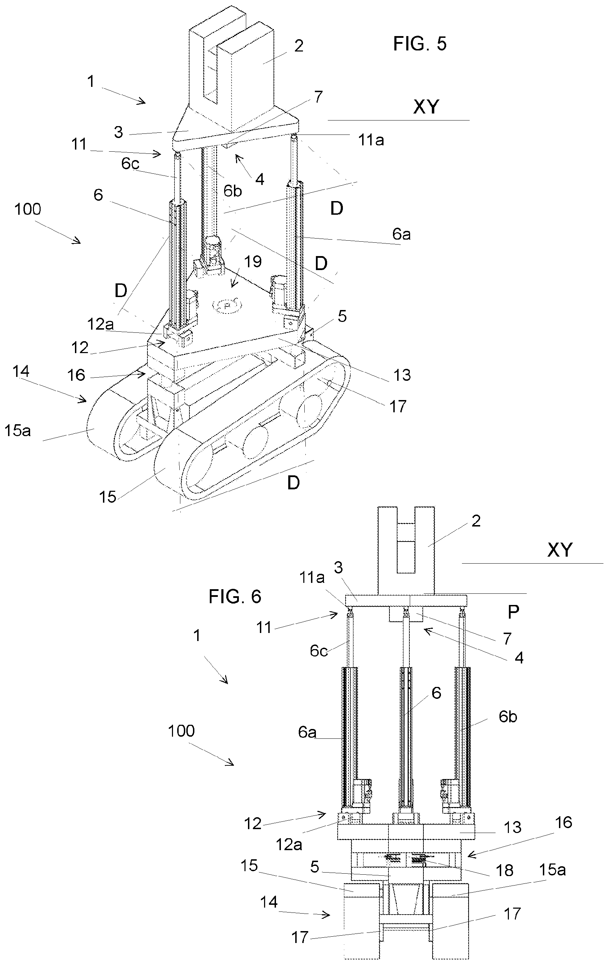

Thereafter, the third inclinometer (8a) detects the inclination of the first axis (Y) and communicates the inclination value measured to the control unit (5) in order to newly command the three electrical linear actuators (6, 6a, 6b) in order to move the support (3) so as to arrange the first axis (Y) and the second axis (X) on an inclined plane (P), inclined by an angle of less than 2 first degrees with respect to the reference horizontal plane (xy) (see figures 5 and 6).

Further, the first inclinometer (4a) communicates with the control unit (5) to carry out a first movement of the support (3) while the third inclinometer (8a) communicates with the control unit (5) to carry out a second movement of the support (3), which second movement, as it derives from a signal received by the second inclinometer (8a) which is more sensitive, enables obtaining the set objective, i.e. to arrange the plane (P) inclined by a predetermined angle with respect to the reference horizontal plane (xy) so as to determine the alignment of the main axis (S) of the topographic survey instrument (2) with the gravitational vertical passing through the intersection point (P1) (see figures 5 and 6).

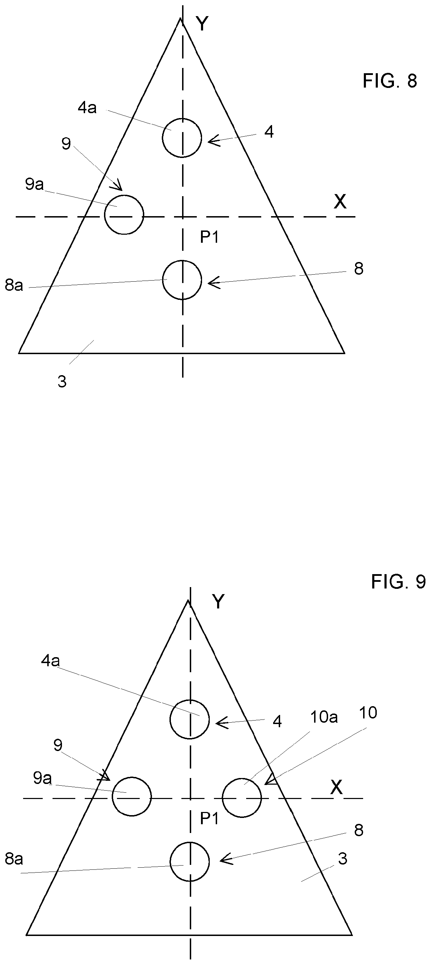

The levelling device (1) can comprise a fourth inclination sensor (10) that is mounted on board the support (3) in order to detect the inclination of the second axis (X); the fourth inclination sensor (10) is a fourth inclinometer (10a) having a measuring range comprised between -20° and +20°; the control unit (5) is connected to the fourth sensor (10) and is configured so that it commands the three electrical linear actuators (6, 6a, 6b) for moving the support (3) as a function of the signal received from the fourth inclination sensor (10) (see figure 9).

In detail, the control unit (5) is configured in such a way that, when the topographic survey instrument (2) is removably fixed to the support (3) by means of the removable fixing means so that the main axis (S) of the topographic survey instrument (2) passes through the intersection point (P1) and through the orthocentre of the equilateral triangle, it commands the three electrical linear actuators (6, 6a, 6b), as a function of the signal received from the first inclination sensor (4), the second inclination sensor (9), the third inclination sensor (8) and the fourth inclination sensor (10), in order to move the support (3) so that the first axis (Y) and the second axis (X) define a plane (P), inclined by a predetermined angle with respect to the reference horizontal plane (xy), so as to determine the alignment of the main axis (S) of the topographic survey instrument (2) with the gravitational vertical passing through the intersection point (P1).

The fourth sensor (10) preferably detects inclination values of the second axis (X) comprised between -14.5° and +14.5°.

The second inclination sensor (9) and the fourth inclination sensor (10) can have the same resolution.

The fourth inclination sensor (10) can be more sensitive to the variations in inclination with respect to the second inclination sensor (9).

The second inclinometer (9a) and the fourth inclinometer (10a) detect the inclination of the second axis (X).

In detail, the fourth inclinometer (10a) detects the inclination of the second axis (X) when the inclination value measured is comprised in the range between -14.5° e +14.5°, while the second inclinometer (9a) detects the inclination of the second axis (X) when the inclination value measured is out of the above range.

During use of the levelling device (1) of the present invention, initially the first inclinometer (4a) detects the inclination of the first axis (Y) and communicates the inclination value measured to the control unit (5). At the same time, the second inclinometer (9a) detects the inclination of the second axis (X) and communicates the inclination value measured to the control unit (5). The control unit commands the three electrical linear actuators (6, 6a, 6b) to carry out a first correction of the inclination of the first axis (Y) and second axis (X) (see figures 3 and 4).

Thereafter, the third inclinometer (8a) and the fourth inclinometer (10a) respective detect the inclination of the first axis (Y) and second axis (X) and communicate the inclination values measured to the control unit (5) in order to newly command the three electrical linear actuators (6, 6a, 6b) in order to move the support (3) so as to arrange the first axis (Y) and the second axis (X) on an inclined plane (P), inclined by an angle of less than 2 first degrees with respect to the reference horizontal plane (xy) (see figures 5 and 6).

Further, the second inclinometer (9a) communicates with the control unit (5) to carry out a first movement of the support (3) while the fourth inclinometer (10a) communicates with the control unit (5) to carry out a second movement of the support (3), which second movement, as it derives from a signal received by the fourth inclinometer (10a) which is more sensitive, enables obtaining the set objective, i.e. to arrange plane (P), inclined by a predetermined angle with respect to the reference horizontal plane (xy), so as to determine the alignment of the main axis (S) of the topographic survey instrument (2) with the gravitational vertical passing through the intersection point (P1) (see figures 5 and 6).

The levelling device (1) can comprise a plurality of joints (11) each having three degrees of freedom in space, and wherein each linear electrical actuator (6, 6a, 6b) comprises a rod (6c); each joint (11a) of the plurality of joints (11) is arranged at the first free end of the rod (6c) of each linear electrical actuator (6, 6a, 6b) so that each linear electrical actuator (6, 6a, 6b) is rotary coupled to the support (3) by means of each joint (11a) of the plurality of joints (11).

Each joint (11a) of the plurality of joints (11) advantageously connects the support (3) to each linear electrical actuator (6, 6a, 6b) so that a relative motion between them is possible.

Each linear electrical actuator (6, 6a, 6b) can be rotatable with respect to the support (3).

The plurality of joints (11) advantageously makes the coupling between each linear electrical actuator (6, 6a, 6b) and the support (3) a rotoidal coupling.

Each linear electrical actuator (6, 6a, 6b) is fixed to the support (3) by means of each joint (11a) of the plurality of joints (11).

By way of example, each joint (11a) of the plurality of joints (11) can be a universal joint.

Each joint (11a) of the plurality of joints (11) can be a swivel joint having three degrees of freedom in the reference horizontal plane (xy).

The levelling device (1) can comprise a first plurality of joints (12) each having a degree of freedom; each joint (12a) of the first plurality of joints (12) is arranged at the second free end of each linear electrical actuator (6, 6a, 6b) so as to be interposed between the rest base (13) and each linear electrical actuator (6, 6a, 6b) in order to enable rotation of each linear electrical actuator (6, 6a, 6b) with respect to a transversal axis to the longitudinal extension axis of each linear electrical actuator (6, 6a, 6b) and which passes through the rest base (13).

Each joint (12a) of the first plurality of joints (12) advantageously enables the rotation of each linear electrical actuator (6, 6a, 6b).

Each linear electrical actuator (6, 6a, 6b) can be rotatable with respect to the rest base (13).

The first plurality of joints (12) advantageously makes the coupling between each linear electrical actuator (6, 6a, 6b) and the rest base (13) a rotoidal coupling.

In this way, the levelling device (1) is made more flexible and the possible movement of the three electrical linear actuators (6, 6a, 6b) is increased as they are not rigidly fixed to the rest base (13); this might lead to a breakage of the rest base (13) during the coordinated movement of the three electrical linear actuators (6, 6a, 6b).

The rest base (13) can define a planar surface at which the rotary coupling with the three electrical linear actuators (6, 6a, 6b) takes place.

The axis with respect to which the three electrical linear actuators (6, 6a, 6b) takes place can extend on the planar surface.

The three electrical linear actuators (6, 6a, 6b) are fixed to the rest base (13) at a mutual distance (D) that is such as to delineate an equilateral triangle.

By distance (D) is meant the distance between each connection point between a linear electrical actuator (6, 6a, 6b) and the rest base (13).

The translation of the rod (6c) of each linear electrical actuator (6, 6a, 6b) and the rotation of the body of each actuator (6, 6a, 6b) ensure a movement of the support (3) in space.

The levelling device (1) can comprise movement means (14) which are fixable to each linear electrical actuator (6, 6a, 6b) in order to move the topographic survey instrument (2) when the three electrical linear actuators (6, 6a, 6b) are coupled to the support (3) and when the topographic survey instrument (2) is removably fixed to the support (3).

The movement means (14) can advantageously make the levelling device (1) mobile and, therefore, also the topographic survey instrument (2) when supported by the support (3).

The movement means (14) can be activated manually.

Alternatively, the control unit (5) can be programmed to activate the movement means (14) automatically.

The movement means (14) can be fixed to the rest base (13).

Each rod (6c) of the three electrical linear actuators (6, 6a, 6b) can lengthen or shorten along the relative longitudinal extension axis.

Once the zone in which the topographic survey instrument (2) is to carry out the measurements has been mapped, the control unit (5) will advantageously be able to activate the movement means (14) so that the levelling device (1) and therefore the topographic survey instrument (2) can reach the points at which the measurements will need to be made.

The movement means (14) can comprise at least a track (15).

The track (15) advantageously makes the levelling device (1) more stable on marshy, damp and hillside areas, as it enables smaller pressure on the terrain and, on particular deformable and loose ground conditions, and also guarantees an increase in adherence thereof to the surface on which it is located.

The rest base (13) can be interposed between the movement means (14) and the three electrical linear actuators (6, 6a, 6b).

The levelling device (1) can comprise a plurality of vibration damping elements (16) which are arranged interposed between the movement means (14) and the rest base (13) with the aim of damping any vibrations that might affect the topographic survey instrument (2) during the movement of the levelling device (1).

The movement means (14) can comprise two tracks (15, 15a) which are activated in rotation by two drive wheels (17).

The two tracks (15, 15a) can be arranged one opposite another with respect to the motor (18) activating the two drive wheels (17).

Likewise, the two drive wheels (17) can be arranged opposite one another.

The motor (18) activating the two drive wheels (17) can be an electric motor (18) powered by a battery.

Further, when the topographic survey instrument (2) is supported by the support (3) and the three electrical linear actuators (6, 6a, 6b) are commanded to move the support (3), the three electrical linear actuators (6, 6a, 6b) move the support (3) and bring it to a determined distance from the ground.

At a raised distance from the ground, the weight of the topographic survey instrument (2) might cause oscillations of the rest base (13) with respect to the movement means (14).

For this reason, the levelling device (1) can comprise clamping means (19) for clamping the rest base (13) to the movement means (14) with the aim of increasing the rigidity of the levelling device (1).

The clamping means (19) can be activated once the topographic survey instrument (2) has been levelled and is to proceed with the measurements.

Further, the levelling device (1) can comprise a memory card (not illustrated) in which the parameters relating to the conditions in which the topographic survey instrument (2) and the values of the measurements are memorised.

A levelling system (100) is described for levelling a topographic survey instrument (2) with respect to a reference horizontal plane (xy) comprising: a levelling device (1) according to the above-described embodiments; a topographic survey instrument (2) (see figures 1-6).

In the levelling system (100) of the present invention, the topographic survey instrument (2) is removably fixed to the support (3) so that the main axis passes through the intersection point (P1) and through the orthocentre of the equilateral triangle.

## Claims

1. A levelling device (1) for levelling a motorised total station with respect to a reference horizontal plane (xy) wherein:
it comprises a support (3) that is arranged for supporting a motorised total station (2);
it comprises removable fixing means;
it comprises a first inclination sensor (4) and a second inclination sensor (9) which are mounted on board the support (3) in order to detect an inclination, respectively, of a first axis (Y) and a second axis (X), which intersect in a relative intersection point (P1) so as to be perpendicular to one another;
the first axis (Y) is the respective inclination measurement axis of the first inclination sensor (4) and the second axis (X) is the respective inclination measurement axis of the second inclination sensor (9);
it comprises three electrical linear actuators (6, 6a, 6b) which are rotatably couplable to the support (3), at a relative first end, at a mutual distance (D) such as to delineate an equilateral triangle and which are arranged so as to move the support (3);
the first inclination sensor (4) and the second inclination sensor (9) are arranged in proximity of the orthocentre of the equilateral triangle with respect to the edge of the support (3);
it comprises a rest base (13) to which the three electrical linear actuators (6, 6a, 6b) are rotatably coupled at a relative second end;
it comprises a control unit (5) which is connected to the first inclination sensor (4) and to the second inclination sensor (9) in order to receive the signal relative the inclination value measured and which is connected to the three electrical linear actuators (6, 6a, 6b) in order to move the support (3);
**characterised in that**:
the removable fixing means are suitable for removably fixing the motorised total station (2) to the support (3) so that the main axis (S) of the motorised total station (2) passes through the intersection point (P1) and through the orthocentre of the equilateral triangle;
the first axis (Y) and the second axis (X) define a plane (P) which is parallel to the plane on which the equilateral triangle delineated by the coupling points among the three electrical linear actuators (6, 6a, 6b) and the support (3) lies;
the first inclination sensor (4) and the second inclination sensor (9) are equidistant from the orthocentre of the equilateral triangle;
the control unit (5) is configured in such a way that it commands the three electrical linear actuators (6, 6a, 6b) to move the support (3) so that the plane (P) is inclined by a predetermined angle with respect to the reference horizontal plane (xy), so as to determine the alignment of the main axis (S) of the motorised total station (2) with the gravitational vertical passing through the intersection point (P1).

2. The levelling device (1) of any one of the preceding claims, wherein the first inclination sensor (4) is a first inclinometer (4a) having a measuring range comprised between -40° and +40°.

3. The levelling device (1) of any one of the preceding claims, wherein the second inclination sensor (9) is a second inclinometer (9a) having a measuring range comprised between -40° and +40°.

4. The levelling device (1) of any one of the preceding claims, comprising a third inclination sensor (8) that is mounted on board the support (3) in order to detect the inclination of the first axis (Y); wherein: the third inclination sensor (8) is a third inclinometer (8a) having a measuring range comprised between - 20° and +20°; the control unit (5) is connected to the third inclination sensor (8) in order to receive the signal relative to the inclination value measured and is configured in such a way that it commands the three electrical linear actuators (6, 6a, 6b) in order to move the support (3) as a function of the signal received from the third inclination sensor (8).

5. The levelling device (1) of claim 3 or 4, comprising a fourth inclination sensor (10) that is mounted on board the support (3) in order to detect the inclination of the second axis (X); wherein: the fourth inclination sensor (10) is a fourth inclinometer (10a) having a measuring range comprised between - 20° and +20°; the control unit (5) is connected to the fourth sensor (10) and is configured so that it commands the three electrical linear actuators (6, 6a, 6b) for moving the support (3) as a function of the signal received from the fourth inclination sensor (10).

6. The levelling device (1) of any one of the preceding claims, comprising a plurality of joints (11) each having three degrees of freedom in space, and wherein each linear electrical actuator (6, 6a, 6b) comprises a rod (6c); each joint (11a) of the plurality of joints (11) is arranged at the first free end of the rod (6c) of each linear electrical actuator (6, 6a, 6b) so that each linear electrical actuator (6, 6a, 6b) is rotatably coupled to the support (3) by means of each joint (11a) of the plurality of joints (11).

7. The levelling device (1) of any one of the preceding claims, comprising: a first plurality of joints (12) each having a degree of freedom; each joint (12a) of the first plurality of joints (12) is arranged at the second free end of each linear electrical actuator (6, 6a, 6b) so as to be interposed between the rest base (13) and each linear electrical actuator (6, 6a, 6b) in order to enable rotation of each linear electrical actuator (6, 6a, 6b) with respect to a transversal axis to the longitudinal extension axis of each linear electrical actuator (6, 6a, 6b) and which passes through the rest base (13).

8. The levelling device (1) of any one of the preceding claims, comprising movement means (14) which are fixable to each linear electrical actuator (6, 6a, 6b) in order to move the motorised total station (2) when the three electrical linear actuators (6, 6a, 6b) are rotatably coupled to the support (3) and when the motorised total station (2) is removably fixed to the support (3).

9. The levelling device (1) of the preceding claim, wherein the movement means (14) comprise at least a track (15).

10. The levelling device (1) of any one of the preceding claims, wherein the motorised total station (2) comprises a base and it is removably fixed to the support (3) by the removable fixing means so that the base of the motorised total station (2) is parallel to the plane identified by the first axis (Y) and second axis (X).

11. A levelling system (100) for levelling a motorised total station (2) with respect to a reference horizontal plane (xy) comprising:
a levelling device (1) of any one of the preceding claims;
a motorised total station (2).

## Patentansprüche

1. Nivelliervorrichtung (1) zum Nivellieren einer motorisierten Totalstation in Bezug auf eine horizontale Referenzebene (xy), wobei:
sie einen Träger (3) umfasst, der zum Tragen einer motorisierten Totalstation (2) angeordnet ist;
sie abnehmbare Befestigungsmittel umfasst;
sie einen ersten Neigungssensor (4) und einen zweiten Neigungssensor (9) umfasst, die an Bord des Trägers (3) angebracht sind, um eine Neigung einer ersten Achse (Y) bzw. einer zweiten Achse (X) zu erfassen, die sich in einem relativen Schnittpunkt (P1) schneiden, so dass sie senkrecht zueinander stehen;
die erste Achse (Y) ist die jeweilige Neigungsmessachse des ersten Neigungssensors (4) und die zweite Achse (X) ist die jeweilige Neigungsmessachse des zweiten Neigungssensors (9);
sie drei elektrische lineare Aktuatoren (6, 6a, 6b) umfasst, die drehbar mit dem Träger (3) an einem relativen ersten Ende in einem gegenseitigen Abstand (D) gekoppelt werden können, so dass sie ein gleichseitiges Dreieck beschreiben, und die so angeordnet sind, dass sie den Träger (3) bewegen;
der erste Neigungssensor (4) und der zweite Neigungssensor (9) in der Nähe des orthogonalen Mittelpunkts des gleichseitigen Dreiecks in Bezug auf die Kante des Trägers (3) angeordnet sind;
sie umfasst eine Auflagefläche (13), an der die drei elektrischen Linearaktuatoren (6, 6a, 6b) an einem zweiten Ende drehbar befestigt sind;
sie eine Steuereinheit (5) umfasst, die mit dem ersten Neigungssensor (4) und dem zweiten Neigungssensor (9) verbunden ist, um das Signal bezüglich des gemessenen Neigungswertes zu empfangen, und die mit den drei elektrischen Linearaktuatoren (6, 6a, 6b) verbunden ist, um den Träger (3) zu bewegen;
**dadurch gekennzeichnet, dass**:
die abnehmbaren Befestigungsmittel geeignet sind, die motorisierte Totalstation (2) abnehmbar am Träger (3) zu befestigen, so dass die Hauptachse (S) der motorisierten Totalstation (2) durch den Schnittpunkt (P1) und durch das orthogonale Zentrum des gleichseitigen Dreiecks verläuft;
die erste Achse (Y) und die zweite Achse (X) eine Ebene (P) definieren, die parallel zu der Ebene ist, auf der das gleichseitige Dreieck liegt, das durch die Kopplungspunkte zwischen den drei elektrischen Linearaktuatoren (6, 6a, 6b) und dem Träger (3) beschrieben wird;
der erste Neigungssensor (4) und der zweite Neigungssensor (9) sind gleich weit vom orthogonalen Mittelpunkt des gleichseitigen Dreiecks entfernt;
die Steuereinheit (5) so konfiguriert ist, dass sie den drei elektrischen Linearaktuatoren (6, 6a, 6b) befiehlt, den Träger (3) so zu bewegen, dass die Ebene (P) um einen vorbestimmten Winkel in Bezug auf die horizontale Referenzebene (xy) geneigt ist, um die Ausrichtung der Hauptachse (S) der motorisierten Totalstation (2) mit der durch den Schnittpunkt (P1) verlaufenden Gravitationsvertikalen zu bestimmen.

2. Die Nivelliervorrichtung (1) nach einem der vorhergehenden Ansprüche, wobei der erste Neigungssensor (4) ein erster Neigungsmesser (4a) mit einem Messbereich zwischen -40° und +40° ist.

3. Die Nivelliervorrichtung (1) nach einem der vorhergehenden Ansprüche, wobei der zweite Neigungssensor (9) ein zweiter Neigungsmesser (9a) mit einem Messbereich zwischen -40° und +40° ist.

4. Die Nivelliervorrichtung (1) nach einem der vorhergehenden Ansprüche, die einen dritten Neigungssensor (8) umfasst, der an Bord des Trägers (3) angebracht ist, um die Neigung der ersten Achse (Y) zu erfassen; wobei: der dritte Neigungssensor (8) ein dritter Neigungsmesser (8a) mit einem Messbereich ist, der zwischen -20° und +20°; die Steuereinheit (5) ist mit dem dritten Neigungssensor (8) verbunden, um das Signal bezüglich des gemessenen Neigungswerts zu empfangen, und ist so konfiguriert, dass sie die drei elektrischen Linearaktuatoren (6, 6a, 6b) steuert, um den Träger (3) in Abhängigkeit von dem vom dritten Neigungssensor (8) empfangenen Signal zu bewegen.

5. Die Nivelliervorrichtung (1) nach Anspruch 3 oder 4 umfasst einen vierten Neigungssensor (10), der an Bord des Trägers (3) montiert ist, um die Neigung der zweiten Achse (X) zu erfassen; wobei: der vierte Neigungssensor (10) ein vierter Neigungsmesser (10a) ist, der einen Messbereich zwischen -20° und +20°; die Steuereinheit (5) ist mit dem vierten Sensor (10) verbunden und so konfiguriert, dass sie die drei elektrischen Linearaktuatoren (6, 6a, 6b) zum Bewegen des Trägers (3) in Abhängigkeit von dem von dem vierten Neigungssensor (10) empfangenen Signal steuert.

6. Die Nivelliervorrichtung (1) nach einem der vorhergehenden Ansprüche, die eine Vielzahl von Gelenken (11) mit jeweils drei Freiheitsgraden im Raum umfasst, und wobei jeder elektrische Linearaktuator (6, 6a, 6b) eine Stange (6c) umfasst; jedes Gelenk (11a) der Vielzahl von Gelenken (11) an dem ersten freien Ende der Stange (6c) jedes linearen elektrischen Aktuators (6, 6a, 6b) angeordnet ist, so dass jeder lineare elektrische Aktuator (6, 6a, 6b) mittels jedes Gelenks (11a) der Vielzahl von Gelenken (11) drehbar mit dem Träger (3) gekoppelt ist.

7. Die Nivelliervorrichtung (1) nach einem der vorhergehenden Ansprüche, umfassend: eine erste Mehrzahl von Gelenken (12), die jeweils einen Freiheitsgrad aufweisen; jedes Gelenk (12a) der ersten Vielzahl von Gelenken (12) am zweiten freien Ende jedes linearen elektrischen Aktuators (6, 6a, 6b) so angeordnet ist, dass es zwischen der Ruhebasis (13) und jedem linearen elektrischen Aktuator (6, 6a, 6b) eingefügt ist, um eine Drehung jedes linearen elektrischen Aktuators (6, 6a, 6b) in Bezug auf eine Querachse zur Längsausdehnungsachse jedes linearen elektrischen Aktuators (6, 6a, 6b) zu ermöglichen, die durch die Ruhebasis (13) verläuft.

8. Nivelliervorrichtung (1) nach einem der vorhergehenden Ansprüche, mit Bewegungsmitteln (14), die an jedem elektrischen Linearaktuator (6, 6a, 6b) befestigt werden können, um die motorisierte Totalstation (2) zu bewegen, wenn die drei elektrischen Linearaktuatoren (6, 6a, 6b) drehbar mit dem Träger (3) gekoppelt sind und wenn die motorisierte Totalstation (2) lösbar am Träger (3) befestigt ist.

9. Die Nivelliervorrichtung (1) nach dem vorhergehenden Anspruch, wobei die Bewegungsmittel (14) mindestens eine Schiene (15) umfassen.

10. Die Nivelliervorrichtung (1) nach einem der vorhergehenden Ansprüche, wobei die motorisierte Totalstation (2) einen Sockel umfasst und durch die abnehmbaren Befestigungsmittel abnehmbar am Träger (3) befestigt ist, so dass der Sockel der motorisierten Totalstation (2) parallel zu der durch die erste Achse (Y) und die zweite Achse (X) bestimmten Ebene liegt.

11. Nivelliersystem (100) zum Nivellieren einer motorisierten Totalstation (2) in Bezug auf eine horizontale Referenzebene (xy), umfassend:
eine Nivelliervorrichtung (1) nach einem der vorhergehenden Ansprüche;
eine motorisierte Totalstation (2).

## Revendications

1. Dispositif de nivellement (1) pour niveler une station totale motorisée par rapport à un plan horizontal de référence (xy) dans lequel:
il comprend un support (3) conçu pour supporter une station totale motorisée (2) ;
il comprend des moyens de fixation amovibles;
il comprend un premier capteur d'inclinaison (4) et un second capteur d'inclinaison (9) qui sont montés à bord du support (3) afin de détecter une inclinaison, respectivement, d'un premier axe (Y) et d'un second axe (X), qui se croisent en un point d'intersection relatif (P1) de manière à être perpendiculaires l'un à l'autre ;
le premier axe (Y) est l'axe de mesure de l'inclinaison du premier capteur d'inclinaison (4) et le deuxième axe (X) est l'axe de mesure de l'inclinaison du deuxième capteur d'inclinaison (9);
il comprend trois actionneurs linéaires électriques (6, 6a, 6b) qui sont couplés de manière rotative au support (3), à une première extrémité relative, à une distance mutuelle (D) telle qu'elle délimite un triangle équilatéral et qui sont disposés de manière à déplacer le support (3);
le premier capteur d'inclinaison (4) et le second capteur d'inclinaison (9) sont disposés à proximité de l'orthocentre du triangle équilatéral par rapport au bord du support (3);
il comprend une base de repos (13) à laquelle les trois actionneurs linéaires électriques (6, 6a, 6b) sont couplés de manière rotative à une deuxième extrémité relative;
il comprend une unité de commande (5) qui est connectée au premier capteur d'inclinaison (4) et au deuxième capteur d'inclinaison (9) pour recevoir le signal relatif à la valeur d'inclinaison mesurée et qui est connectée aux trois actionneurs linéaires électriques (6, 6a, 6b) pour déplacer le support (3);
**caractérisé par le fait que** :
les moyens de fixation amovibles sont aptes à fixer de manière amovible la station totale motorisée (2) au support (3) de sorte que l'axe principal (S) de la station totale motorisée (2) passe par le point d'intersection (P1) et par l'orthocentre du triangle équilatéral ;
le premier axe (Y) et le deuxième axe (X) définissent un plan (P) parallèle au plan sur lequel se trouve le triangle équilatéral délimité par les points d'accouplement entre les trois actionneurs linéaires électriques (6, 6a, 6b) et le support (3) ;
le premier capteur d'inclinaison (4) et le second capteur d'inclinaison (9) sont équidistants de l'orthocentre du triangle équilatéral ;
l'unité de commande (5) est configurée de manière à commander aux trois actionneurs linéaires électriques (6, 6a, 6b) de déplacer le support (3) de manière à ce que le plan (P) soit incliné d'un angle prédéterminé par rapport au plan horizontal de référence (xy), afin de déterminer l'alignement de l'axe principal (S) de la station totale motorisée (2) avec la verticale gravitationnelle passant par le point d'intersection (P1).

2. Le dispositif de nivellement (1) de l'une quelconque des revendications précédentes, dans lequel le premier capteur d'inclinaison (4) est un premier inclinomètre (4a) ayant une plage de mesure comprise entre -40° et +40°.

3. Le dispositif de nivellement (1) de l'une quelconque des revendications précédentes, dans lequel le second capteur d'inclinaison (9) est un second inclinomètre (9a) ayant une plage de mesure comprise entre -40° et +40°.

4. Le dispositif de nivellement (1) de l'une quelconque des revendications précédentes, comprenant un troisième capteur d'inclinaison (8) monté sur le support (3) afin de détecter l'inclinaison du premier axe (Y) ; dans lequel : le troisième capteur d'inclinaison (8) est un troisième inclinomètre (8a) ayant une plage de mesure comprise entre -20° et +20° ; dans lequel : le troisième capteur d'inclinaison (8) est un troisième inclinomètre (8a) ayant une plage de mesure comprise entre -20° et +20° ; l'unité de commande (5) est connectée au troisième capteur d'inclinaison (8) afin de recevoir le signal relatif à la valeur d'inclinaison mesurée et est configurée de manière à commander les trois actionneurs linéaires électriques (6, 6a, 6b) afin de déplacer le support (3) en fonction du signal reçu du troisième capteur d'inclinaison (8).

5. Le dispositif de nivellement (1) de la revendication 3 ou 4, comprenant un quatrième capteur d'inclinaison (10) monté sur le support (3) afin de détecter l'inclinaison du deuxième axe (X) ; dans lequel : le quatrième capteur d'inclinaison (10) est un quatrième inclinomètre (10a) ayant une plage de mesure comprise entre -20° et +20° ; dans lequel : le quatrième capteur d'inclinaison (10) est un quatrième inclinomètre (10a) ayant une plage de mesure comprise entre -20° et +20° ; l'unité de commande (5) est connectée au quatrième capteur (10) et est configurée de manière à commander les trois actionneurs linéaires électriques (6, 6a, 6b) pour déplacer le support (3) en fonction du signal reçu du quatrième capteur d'inclinaison (10).

6. Le dispositif de nivellement (1) de l'une quelconque des revendications précédentes, comprenant une pluralité d'articulations (11) ayant chacune trois degrés de liberté dans l'espace, et dans lequel chaque actionneur électrique linéaire (6, 6a, 6b) comprend une tige (6c) ; chaque articulation (11a) de la pluralité d'articulations (11) est disposée à la première extrémité libre de la tige (6c) de chaque actionneur électrique linéaire (6, 6a, 6b) de sorte que chaque actionneur électrique linéaire (6, 6a, 6b) est couplé en rotation au support (3) au moyen de chaque articulation (11a) de la pluralité d'articulations (11).

7. Le dispositif de nivellement (1) de l'une quelconque des revendications précédentes, comprenant : une première pluralité d'articulations (12) ayant chacune un degré de liberté ; chaque articulation (12a) de la première pluralité d'articulations (12) est disposée à la deuxième extrémité libre de chaque actionneur électrique linéaire (6, 6a, 6b) de manière à être interposée entre la base de repos (13) et chaque actionneur électrique linéaire (6, 6a, 6b) afin de permettre la rotation de chaque actionneur électrique linéaire (6, 6a, 6b) par rapport à un axe transversal à l'axe d'extension longitudinale de chaque actionneur électrique linéaire (6, 6a, 6b) et qui passe par la base de repos (13).

8. Le dispositif de nivellement (1) de l'une quelconque des revendications précédentes, comprenant des moyens de déplacement (14) qui peuvent être fixés à chaque actionneur électrique linéaire (6, 6a, 6b) afin de déplacer la station totale motorisée (2) lorsque les trois actionneurs électriques linéaires (6, 6a, 6b) sont couplés de manière rotative au support (3) et lorsque la station totale motorisée (2) est fixée de manière amovible au support (3).

9. Le dispositif de nivellement (1) de la revendication précédente, dans lequel les moyens de déplacement (14) comprennent au moins un rail (15).

10. Le dispositif de nivellement (1) de l'une quelconque des revendications précédentes, dans lequel la station totale motorisée (2) comprend une base et est fixée de manière amovible au support (3) par les moyens de fixation amovibles de sorte que la base de la station totale motorisée (2) est parallèle au plan identifié par le premier axe (Y) et le deuxième axe (X).

11. Système de mise à niveau (100) pour la mise à niveau d'une station totale motorisée (2) par rapport à un plan horizontal de référence (xy) comprenant :
un dispositif de mise à niveau (1) selon l'une quelconque des revendications précédentes ;
une station totale motorisée (2).
